# EUROPEAN PATENT APPLICATION

(11) **EP 2 317 352 A1**
(43) Date of publication of application: **04.05.2011**
(21) Application number: 09174908.5
(22) Date of filing: 03.11.2009
(51) Int. Cl.: G02B 6/00

(54) **Side light guide and light device**

(71) Applicant: 3M Innovative Properties Company, St. Paul MI 55133-3427 (US)
(72) Inventor: The designation of the inventor has not yet been filed
(74) Representative: Voortmans, Gilbert J.L.

(57) **Abstract**

The present invention provides in one aspect a side-light guide (10) having a naked core (20) of transparent polymeric material without a cladding. The side-light guide has a first surface (30) defining a light emitting surface extending longitudinally along the side-light guide and a second surface (24) having light-extraction elements (32) extending longitudinally along the side-light guide and the second surface is arranged generally opposite to the first surface, the side-light guide has a generally circular cross-section comprising cut away regions (40) at opposing sides defining on each opposite side at least one planar surface (44) tapering inwardly from the first towards the second surface.
Further provided is a light device (100) comprising the side-light guide.

## Description

The present invention relates to a side-light guide and to lighting devices comprising a side-light guide.

Light guides are increasingly being used for decorative and functional lighting purposes in various locations, some of which require the light guide to emit light selectively (for example, comparatively uniformly or in a particular direction) along its length. Such light guides are referred to in this application as side-light guides. Various mechanisms are known for enabling light that is injected into a guide from a light source at one end to be extracted selectively from the guide along its length to provide, effectively, a linear lighting device. It is recognized that the use of side-light guides in linear lighting devices offers certain advantages: these include, for example, the possibility of using a low voltage light source such as an LED light source, and of separating the light source from the area in which the lighting device is actually located.

One form of side-light guide is described in EP-A-0 594 089 (in the name of Minnesota Mining and Manufacturing Company). The guide has light-extraction elements spaced along its length to cause light that is being propagated along the guide from at least one end thereof to be emitted selectively through a light-emitting region in the wall of the guide. In that case, the light-extraction elements comprise notches in the light guide, each notch having at least one reflecting surface of optical quality i.e. a surface that diffusely scatters only a small amount (generally less than 20%) of the light incident upon it. EP-A-0 956 472 (in the name of Minnesota Mining and Manufacturing Company) and EP-A-1 153 240 (in the name of 3M Innovative Properties Company) both describe other light guides of that type: in the guide described in EP-A-0 956 472, two sets of notches centered along different longitudinal axes are provided with a view to controlling the lateral distribution of light emitted by the guide while, in the guide described in EP-A-1 153 240, the notches have different notch angles with a view to producing a predetermined pattern in the illumination provided by the guide. Generally, light guides of that type offer the advantage that they can be designed to emit light very efficiently along their length and in a preferred direction with a pre-selected distribution, making them suitable for use in lighting devices in a wide number of applications. Other forms of side-light guides are described, for example, in WO 99/22173, WO 00/25159 and WO 01/51851. WO 99/22173 (in the name of 3M Innovative Properties Company) describes a light guide comprising a core surrounded by cladding, in which the inner surface of the cladding is formed with indentations that cause light to be extracted from the light guide. A light-reflecting member may be provided around a portion of the light guide to redirect some of the extracted light in a particular direction. WO 00/25159 (in the name of Minnesota Mining and Manufacturing Company) describes a light guide comprising a core surrounded by a two-part cladding layer, in which the cladding incorporates various reflective materials to enhance the extraction and uniformity of the light emitted by the guide along its length. WO 01/51851 (in the name of 3M Innovative Properties Company) describes a light guide having light extraction structures spaced along its length to cause light to be directed from the light guide towards a diffuse reflective layer that, in turn, directs the light back through the light guide so that it is finally emitted through the region of the guide in which the light extraction structures are located.

US 5,987,199 discloses an optical fiber conduit comprising an optical core surrounded by a cladding with a reflective material or holder and/or reflector attached adjacent to or in contact with the cladding.

Side-light guides are available in both flexible and rigid forms, and in materials that will not break or shatter and have a comparatively long useful life. They are also capable of providing a high level of illumination in an energy-efficient manner. Lighting devices incorporating side-light guides have already been used in various locations. They can, for example, be used as cost effective, safe, versatile alternatives to fluorescent tubes in commercial, architectural, and consumer lighting applications but can also be used in situations in which fluorescent tubes are impractical and/or to achieve effects that cannot be obtained using conventional lighting devices. For example, there is increasing interest in the use of side-light guides in lighting devices in vehicles and it has already been proposed to use such devices on the outside of a vehicle, to outline features such as the rear window or the boot. More recently, manufacturers have become interested in using side-light guides in lighting devices in car interiors for both practical and aesthetic reasons (see, for example, DE-A-100 31 527 in the name of Volkswagen AG and DE-A-102 59 623 in the name of Hella KG Hueck & Co). In a lighting device, side light guides are usually supported in some way, to retain it in the required position and ensure that light is emitted in the required direction. Known methods of supporting side-light guides include the use of brackets or clips (for example, as described in US 6 763 172 of 3M Innovative Properties Company), and channels or rails (for example, as described in US 2004/0240829 also of 3M Innovative Properties Company, in WO 99/22174 of Minnesota Mining and Manufacturing Company, and in the above-mentioned WO 00/25159). In the particular case in which a light guide is used as a lighting device for a car interior, the above-mentioned DE-A-100 31 527 and DE-A-102 59 623 describe that it may be located in a gap in the interior lining of the vehicle. WO 2008/022007 (3M Innovative Properties Company) describes various forms of side-light light guides and supports for facilitating the assembly of lighting devices.

It would now be desirable to find further side-light guides. Desirably, the side-light guide would be easy and convenient to manufacture and be of low cost. Desirably, the side-light guide has good light output allowing desired or required light output and minimum power consumption. Low power consumption is typical of significant importance for application in vehicles. It would typically also be desired that the side-light guide can be readily or easily assembled in a light device at low cost. Desirably the assembly into a light device and the resulting light device have a good or excellent balance of optical performance versus ease and cost of assembly. In particular with flexible or elastic side-light guides, it has been proven challenging to find a good balance between optical performance, ie light output and ease of assembly. Further, in order to minimize the cost of the side-light guide itself, it will generally be desired to use inexpensive material and a minimal amount of different materials. Hence, the side-light guide should be one without a cladding, ie whereby the side-light guide is of a high reflective index material that is in direct contact with air, which provides then the low refractive index instead of a cladding material. This requirement has been found to further complicate finding a cost effective assembly while maximizing retention of optical properties of the side-light guide.

The present invention provides in one aspect a side-light guide having a naked core of transparent polymeric material without a cladding. The side-light guide has a first surface defining a light emitting surface extending longitudinally along the side-light guide and a second surface having light-extraction elements extending longitudinally along the side-light guide and the second surface is arranged generally opposite to the first surface, the side-light guide has a generally circular cross-section comprising cut away regions at opposing sides defining on each opposite side at least one planar surface tapering inwardly from the first towards the second surface.

The term 'cut away region' is intended to describe a region that is absent from what would otherwise be a complete circular cross-section. Hence, the term is not intended to mean that the actual region is cut away. While the region could be shaped by cutting away from a cylindrical light guide, the shape of the light guide including the shape of the cross-section with the cut away regions is typically obtained through molding as described furtheron.

In a further aspect, the invention provides a light device comprising a side-light guide as described above, wherein the side-light guide is located in a support that has an elongate opening for the passage of light emitted by the side-light guide whereby the side-light guide is oriented such that the light emitting surface of the side-light guide is aligned with the elongate opening of the support.

The light device and side-light guide can be used in a wide variety of applications including in particular use in a vehicle both in the interior thereof as well as at the exterior of the vehicle. In one particular application in a vehicle, the light device might be used as a break light, in particular a third break light typically arranged in about the middle of the rear side of the vehicle. The light device may further be used to accentuate and/or outline certain parts or designs on a vehicle such as for example surrounding part or all of the motor grill at the front of a vehicle, in particular a car. However, they can also be used in other vehicles, including all forms of public transport and for many other purposes including, for example: ambient lighting in domestic and industrial buildings; advertising (as replacements for neon lights); and internal lighting in appliances such as refrigerators.

In all such locations, a side-light guide as disclosed and described herein offers the advantage that the light guide can be easily installed in the support, with the correct orientation of the guide being ensured by its engagement with the support.

The side-light guide has a naked core of transparent polymeric material without a cladding. In other words, air is used instead of the cladding to achieve internal reflection within the naked core of the light guide so as to achieve maximum light output at the light emitting surface of the side-light guide. Thus, the naked core of the side-light guide has a refractive index that is larger than that of air to provide for the internal reflection without the need for a cladding material of low refractive index being provided on the core of the side-light guide. As a result, no further separate cladding materials are needed, hence leaving the core naked and use of the terminology 'naked core'. The absence of cladding materials avoids raw material cost associated therewith and further, providing a cladding would typically require additional manufacturing steps, which would still further increase costs. However, the absence of the cladding or in other words the use of air as the cladding provides challenges in the use of the side-light guide in the assembly of a light device. Typically, it has been found that contact between the side-light guide and the support system of the light device needs to be minimized to maximize the light output. Yet, the side-light guide needs to be reliably secured in the light device, which is in particular a challenge in applications such as in vehicles. Further, in some application, it may be desirable to enclose the side-light guide in a housing, which thus surrounds the side-light guide except for an opening in the housing through which light may pass. Minimizing contact in such application is typically difficult without risking twisting or disorientation of the side-light guide during assembly or thereafter. This is in particular so where the length of the side-light guide increases, for example above 50cm or above 1 m and/or where the side-light guide is flexible and/or in particular elastic.

The side-light guide has a generally circular cross-section comprising cut away regions at opposing sides defining on each opposite side at least one planar surface tapering inwardly from the first surface (or light emitting surface) towards the second surface (where the light extraction elements are arranged). It has been found that the planar surfaces tapering inwardly enable easy assembly in a support of a light device providing good retention of the side-light guide without substantial risk of it becoming false oriented. Further, it has been found that the assembly can be done with minimal contact and achieving high light output and good energy efficiency. The planar surfaces tapering inwardly typically only need to engage with one or more line contacts thus minimizing loss of light, yet still achieving desired levels of engagement between the side-light guide and the support.

The side-light guide can be provided in a wide range of lengths but the present side-light guide has particular benefits when length increases. A side-light guide typically will have a length of at least 30cm, for example at least 50cm. Particularly at a length of at least 80cm or at least 1 meter can the side-light guide described herein offer particular advantages in cost and ease and reliable assembly into a light device. The maximum length is typically dependent on the power of the light source and desired uniformity of light output along the length of the side-light guide. Generally, the side-light guide, for example when used with a low power source such as LEDs the maximum length will be about 1.8 m.

In one particular embodiment, the side-light guide has cut away regions at opposing sides defining on each opposite side a planar surface tapering inwardly substantially from the first to the second surface. The cross-section of such a side-light guide hence having a shape substantially resembling that of a pear. A side-light guide with a cross-sectional shape resembling that of a pear has been found to be particularly useful where the support of the light device comprises a housing enclosing the side-light guide and defining an opening for passage of light. Where desired, the opening of such a housing may be closed with a transparent cover. Further, in an embodiment, such a cover may be designed as a lens. To keep the side-light guide in a desired orientation in such an housing, the interior of the housing may be provided with one or more ribs that contact the side-light guide on the planar surface tapering inwardly, thus physically engaging with and holding it in place.

In addition to the inwardly tapering planar surfaces on opposite sides of the side-light guide in the cut away regions, further planar surfaces may be provided as desired. For example, in one particular embodiment, the cut away regions at opposing sides defines on each opposite side a further planar surface tapering inwardly from the second surface to the first surface and connecting to the planar surface extending inwardly from the first towards the second surface thereby defining a generally V-shaped cut away region at each opposite side. The shape of a side-light guide with generally V-shaped cut away regions at each opposite side may be particularly useful where the support of the light device comprises a multiplicity of discrete points of physical engagement between the support and the side-light guide and whereby each of the points are linked or connected to one another along the length of the side-light guide. The points of physical engagement and shape of the cut away regions of the side-light guide can be designed to engage as male-female assuring a reliable retention of the side-light guide in the support. A light device with a support comprising of a multiplicity of points of physical engagement with the side-light guide offers an advantage of flexibility particularly in the lengthwise direction of the side-light guide thus facilitating installment along a curved path or complex paths. This can be of particular advantage where the side-light guide is flexible and/or elastic.

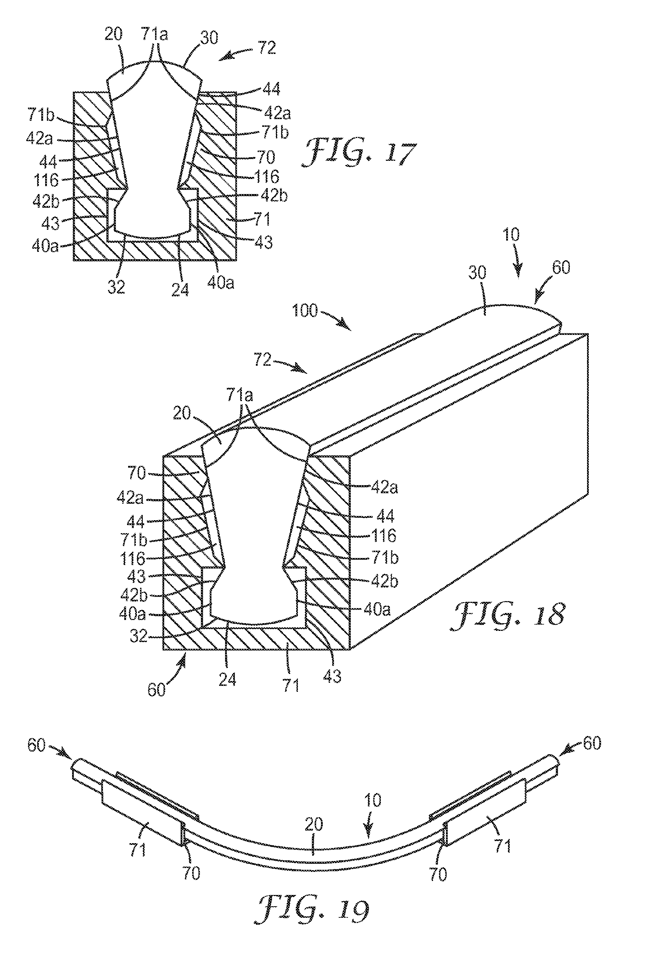

The side-light guide may have further cut away regions. For example a small cut away region at opposite ends at the first surface may be provided and/or further cut away regions may be provided at opposite ends near the second surface as is for example illustrated in figure 17. Generally, the cut away region(s) are identical at the opposite sides, that is they are the mirror image of each other.

The light guide has a light-emitting region extending lengthwise of the guide, the light guide being oriented in the support so that the light-emitting region is aligned with the elongate opening in the support. The light guide comprises light-extraction elements arranged to direct light out of the light guide through the light emitting region. The light-extraction elements are formed in the periphery of the light guide on one side thereof, and the light emitting region is on the other side of the guide. The light-extraction elements, which may be in the form of notches, may comprise optically-smooth reflecting surfaces. Examples of useful notches include those described in EP-A-0 594 089. As described in this European application the notches comprise optically-smooth reflecting surfaces that are designed to cause light which is incident on one of these surfaces while propagating along the guide core to be diverted selectively out of the guide through a light-emitting region on the diametrically-opposite side of the guide. A reflector may be provided at the end of the light guide remote from the light source to return to the light guide any light that has not been diverted out of the guide by the notches. Instead of using one light source to inject light in the side-light guide, a second light source may be provided to inject light into the guide from the opposite end. A more detailed explanation of the effect of the notches can be obtained, if required, from EP-A-0 594 089 together with a description of the various forms that these notches can take. Additional information concerning other forms of the notches, and their location on a light guide, can be obtained from EP-A-0 956 472; 1 153 240 and 1 509 791. In some cases, as described for example in US-A-5 631 994, the notches may be provided in an overlay located on the outside of the light guide. Generally, the characteristics of the light output along the length of the guide are determined by factors such as: the depth to which the notches extend into the guide; the angles of inclination of the notch surfaces; and the distance between the notches along the length of the guide. To minimize light loss through the surfaces of the notches, those surfaces may be provided with a coating of reflective material such as aluminum or silver.

In a particular embodiment, the frequency of light extraction elements, for example notches, may vary along the length of the side-light guide. For example, the frequency of light extraction elements may increase in a direction away from one end of the side-light guide to its opposing end. In another example, the frequency of light extraction elements increases away from both opposite ends of the light guide thereby achieving the highest frequency of light extraction elements near the middle region of the side-light guide. The latter embodiment may be of particular use where light sources are used at both opposite ends of the side-light guide whereas the first example may be more useful with a light source at only one end of the light guide.

In an embodiment, the side-light guide is rigid such that it cannot be bended substantially. In a particular embodiment, the light guide is flexible and preferably also elastic. A typical material that may be used to form the core of the side-light guide is a polyurethane and in particular a cross-linked polyurethane. Such a side-light guide typically will be flexible and may also be elastic. Other materials that may be used to for the core of the side-light guide include polyacrylates and silicones.

The side-light guide including the light extraction elements is typically manufactured by molding. One such method is disclosed in US 6 077 642.
In one particular embodiment, the side-light guide including light extraction elements such as notches, may be molded in a mold comprising two parts that can be separated from each other wherein one of the parts of the mold includes structure to form the light extraction elements. The advantage of the use of a two part mold is that complex shapes of the side-light guide can be readily obtained including for example side-light guide that have generally V-shaped cut away regions as described above. A two part mold for use in such a method may be produced as follows.

Generally, the method for manufacturing the mold may comprise the steps of
- providing a master rod comprising a first portion comprising a plurality of micro-structured features, a second portion;
- forming a metal shell by electro-forming on the first portion of the master rod thereby replicating the micro-structured features;
- machining the metal shell on the master rod
- removing the metal shell from the master rod thereby obtaining a mold insert
- optionally further machining the metal shell
- positioning the mold insert into a first mold part and
- providing a second mold part whereby the first and second mold part when combined form a cavity defining the shape of the desired side-light guide.

The first mold part, for example the upper mold part, may comprise a plurality of micro-structured features, which will be replicated to the molded part during the manufacturing process of the side-light guide and provide the light extraction elements on the side-light guide. These micro-structured features are preferably provided on a mold insert.

Preferably, the micro-structured features of the mold insert can be manufactured for example by electro-forming. In an electro-forming process, a metal deposition shell may be formed on a master rod, carrying the desired micro-structures for forming the light extraction elements of the side-light guide. These micro-structures of the master rod are replicated in a metal shell as a negative image during the electro-forming process. In a particular embodiment, at least one reference edge is provided at the master rod. This reference edge may during the forming process be used for precisely adjusting and orientation of the master rod in the electro-forming process. The reference edge may further be used in a machining step following the electro-forming process to accurately and reproducibly make the mold insert. The reference edge is typically provided at a portion of the master rod that is substantially not or only partially exposed to the electro-forming process, so that it does not interfere with the electro-forming operation. Additionally, the portion of the master rod where the reference edge is positioned may comprise a fixing edge, which allows for accurately and securely fixing of the master rod during the electro-forming process. Such a fixing edge may be formed as an undercut in the material of the master rod.

The invention also provides a light device comprising a side-light guide as described above, wherein the side-light guide is located in a support that has an elongate opening for the passage of light emitted by the side-light guide whereby the side-light guide is oriented such that the light emitting surface of the side-light guide is aligned with the elongate opening of the support. In a particular embodiment, the support contacts the side-light guide in the cut away regions to retain the side-light guide in the desired orientation in the support.

Such contact between the support and the side-light guide should typically be minimized. In one embodiment, this may be achieved by having only a portion of the support contact the side-light guide in the cut away regions along the length of the side-light guide. Contact may be further limited by having the support contact only portions of the planar surfaces of the cut away regions of the side-light guide.

In one embodiment, the support comprises a housing surrounding the side-light guide and whereby an air gap is defined between the support and the second surface of the side-light guide and one or more air gaps on the opposite sides along the length of the side-light guide. The housing has a longitudinal opening arranged to have light from the light emitting surface of the side-light guide pass there through. The side-light guide will be arranged in the housing such that its light emitting surface is aligned with the opening of the housing. In a particular embodiment, the opening may be closed by a transparent, clear or colored, cover. In a further embodiment, the cover closing the opening may be shaped to form a lens.

In yet another embodiment, the support may have a structure such that it can physically engage with the shape of the cut away regions of the side-light guide in a generally mating relationship.

A lighting device in accordance with the invention may be assembled by pushing the light guide into the support through the elongate opening in the latter. Advantageously, the support and/or the light guide are shaped so that, during this process, the user receives an audible and/or tactile indication that the light guide has been correctly positioned in the support.

In one embodiment, the support may comprise two parts which are being brought together and fixed relative to each other during assembling of the light device by means of engagement, e. g. snap-fit or the like. The side-light guide will be brought into contact with the first part of the support and thereby already partially supported. Then, the second support part will be assembled to the first support part which partially supports the side-ligth guide.

In a further embodiment, the light device may comprise a housing comprising two housing parts, which will be brought together and fixed relative to each other during assembling of the light device. Each of the housing parts may comprise supports. The housing parts may be assembled and fixed to each other by means of engagement, e. g. snap-fit or the like. During the assembly of the light device, the side-light guide will be inserted into the first housing part, which may have a u-shape and which comprises supports to partially support the inserted side-light guide, already. After insertion of the side-light guide into the first hosuing part, the second housing part will be brought into contact with the first housing part and fixed relative thereto, e. g. by means of engagement.

Any other suitable means to fix two support parts or two housing parts relative to each other, e. g. adhesive, screws or the like, are conceivable as well.

The light device typically also includes a light source arranged at an end of the light guide. A further light source may be arranged at the opposite end. Any light source can be used but generally lower power light sources will be preferred such as for example light emitting diodes (LEDs).

The following is a summary of embodiments:
1. A side-light guide having a naked core of transparent polymeric material without a cladding, said side-light guide having a first surface defining a light emitting surface extending longitudinally along the side-light guide and a second surface having light-extraction elements extending longitudinally along the side-light guide and said second surface being arranged generally opposite to the first surface, the side-light guide having a generally circular cross-section comprising cut away regions at opposing sides defining on each opposite side at least one planar surface tapering inwardly from said first towards said second surface.
2. A side-light guide according to embodiment 1 wherein each of said planar surfaces substantially extends from said first to said second surface.
3. A side-light guide according to embodiment 1 wherein the cut away regions at opposing sides defines on each opposite side a further planar surface tapering inwardly from said second surface to said first surface and connecting to said planar surface extending inwardly from said first towards said second surface thereby defining a generally V-shaped cut away region at each opposite side.
4. A side-light guide according to any of the previous embodiments wherein further cut away regions are provided on each of the opposite sides of the side-light guide.
5. A side-light guide according to any of the previous embodiments wherein the opposite sides are substantially identical.
6. A side-light guide according to any of the previous embodiments wherein the side-light guide is flexible.
7. A side-light guide according to any of the previous embodiments wherein the side-light guide is elastic.
8. A side-light guide according to any of the previous embodiments wherein said light-extraction elements comprise notches.
9. A side-light guide according to any of the previous embodiments wherein the frequency of light extraction elements varies along the length of the side-light guide.
10. A side-light guide according to embodiment 9 wherein the frequency of light extraction elements increases length-wise in a direction away from at least one end of the side-light guide.
11. A side-light guide according to embodiment 10 wherein the frequency of light extraction elements increases away from both opposite ends of the side light guide thereby defining the highest frequency of light extraction elements in about the middle region between both opposite ends of the side-light guide.
12. A light device comprising a side-light guide as defined in any of the previous embodiments, wherein said side-light guide is located in a support that has an elongate opening for the passage of light emitted by the side-light guide whereby the side-light guide is oriented such that said first surface of said side-light guide is aligned with the elongate opening of the support.
13. A light device according to embodiment 12 wherein said support contacts said side-light guide in said cut away regions to retain said side-light guide in said orientation in the support.
14. A light guide according to embodiment 13 wherein said support contacts only a portion of said side-light guide in said cut away regions along the length of the side-light guide.
15. A light guide according to embodiment 14 wherein said support comprises a housing surrounding the side-light guide and whereby an air gap is defined between the support and the second surface of the side-light guide and one or more air gaps on the opposite sides along the length of the side-light guide.
16. A light device according to embodiment 12 or 13 wherein the side light guide has a cut away region as defined in embodiment 3 and wherein the support is shaped so as to physically engage with said cut away region and retain the side-light guide in said support.
17. A light device according to embodiment 15 wherein the elongate opening comprised in said housing is closed by a transparent cover and wherein said transparent cover defines a lens.
18. A light device according to any of embodiments 12 to 17 comprising a light source coupling light into said side-light guide at an end of said side-light guide.
19. A vehicle comprising a light device as defined in any of embodiments 12 to 17.

The invention is further described in more detail with references to the following drawings without however the intention to limit the invention thereto. All drawings are intended as schematic representations and unless otherwise indicated.
Fig. 1 is a cross-sectional view of a first embodiment of the side-light guide.
Fig. 2 is a perspective view of the side-light guide as shown in fig.1.
Fig. 3 is a side view of the side-light guide as shown in fig.1.
Fig. 4 shows details of an embodiment of light extracting elements of a side-light guide.
Fig. 5 is a cross-sectional view of a second embodiment of the side-light guide.
Fig. 6 is a perspective view of the side-light guide of as shown in fig. 5.
Fig. 7 is a side view of the side-light guide as shown in fig. 5.
Fig. 8 is a cross-sectional view of one embodiment of a light device with the first embodiment of the side-light guide being held in a housing.
Fig. 9 is a perspective view of the light device of as shown in fig. 8.
Fig. 10 is a top view of the light device as shown in fig. 8.
Fig. 11 is a cross-sectional view of another embodiment of a light device with the first embodiment of the side-light guide being held in a housing.
Fig. 12 is a perspective view of the light device of as shown in fig. 11.
Fig. 13 is a top view of the light device as shown in fig. 11.
Fig. 14 is a cross-sectional view of another embodiment of a light device with the second embodiment of the side-light guide being held in a housing.
Fig. 15 is a perspective view of the light device of as shown in fig. 14.
Fig. 16 is a top view of the light device as shown in fig. 14.
Fig. 17 is a cross-sectional view of another embodiment of a light device with the third embodiment of the side-light guide being held by a guiding rail.
Fig. 18 is a perspective view of the light device of as shown in fig. 17.
Fig. 19 shows a light device held by two sections of a guiding rail.
Figs. 20 to 25 illustrate the steps of a manufacturing process for a mold for making a side-light guide.
Figs. 26 and 27 illustrate the steps of a process for making a side-light guide.

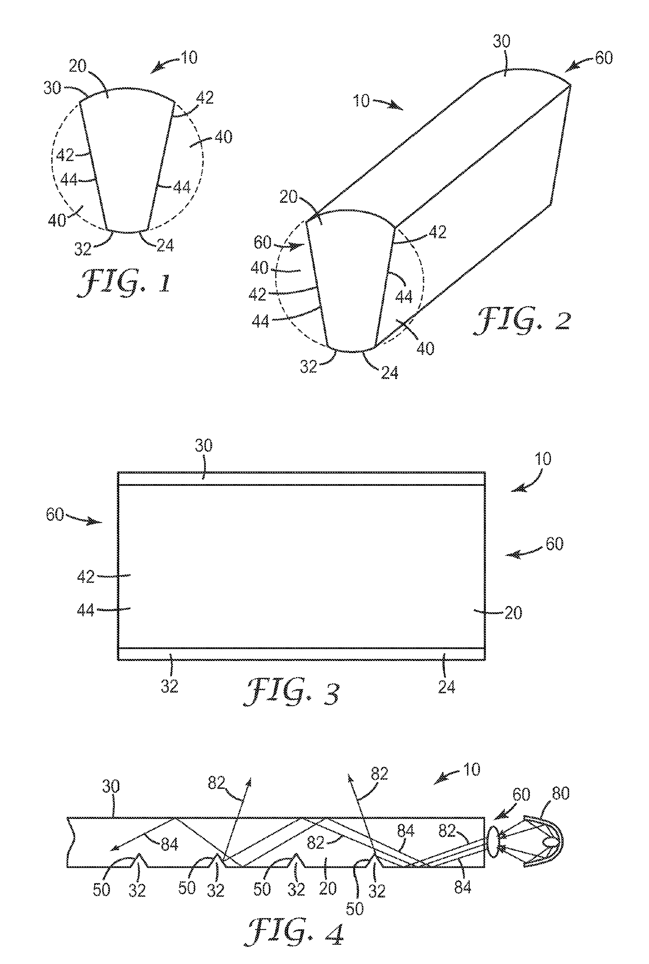

Fig. 1 is a cross-sectional view of a first embodiment of the side-light guide 10. The side-light guide 10, which generally has a circular cross-section, comprises a core 20 formed of a polymeric material having a refractive index larger than that of air.
The side-light guide 10 further comprises a first surface defining a light emitting surface 30 and a second surface 24 being arranged opposite thereto and having light extraction elements 32 shown in detail in figure 4. The light extraction elements 32 are formed by notches 50 in the second surface 24. Fig. 2 shows a perspective view of the side-light guide 10 as shown fig. 1 having opposite ends 60. As apparent from figs. 1 and 2, the side-light guide 10 comprises cut away regions 40. The cut away regions 40 provide for sides 42 opposite to each other and each having a planar surface 44. The planar surfaces 44 are arranged with an angle with respect to each other and define a planar surface tapering inwardly from the first surface 30 towards the second surface 24. Such a shape helps to facilitate light bundling and concentration of the light emitted by the light emitting surface 30 in that light beams which are being extracted by the light extracting elements 32 will generally hit the sides 42 under a more obtuse angle. Thereby, light beams will be reflected on the inside of the sides 42 and will be directed towards the light emitting surface 30 rather than being emitted at the sides 42. Thus, light beams are being concentrated towards the light emitting surface 30.

Furthermore, the planar surface 44 tapering inwardly helps to facilitate keeping the side-light guide 10 in position within the support of the light device, for example within a housing or the like. This is described in more detail below. Fig. 4 illustrates light being injected into the side-light guide from one end 60 by a light source 80. Light beams 82, 84 are generally travelling along the longitudinal core 20 of the side-light guide 10 as can be seen in fig. 4. Light beams 82 hitting the light extracting elements 32 formed by the notches 50 are being reflected towards the light emitting surface 30 and then being emitted through the light emitting surface 30. The light beams 84, which are not hitting the light extraction elements 32 are travelling further through the longitudinal core 20 of the side-light guide 10.

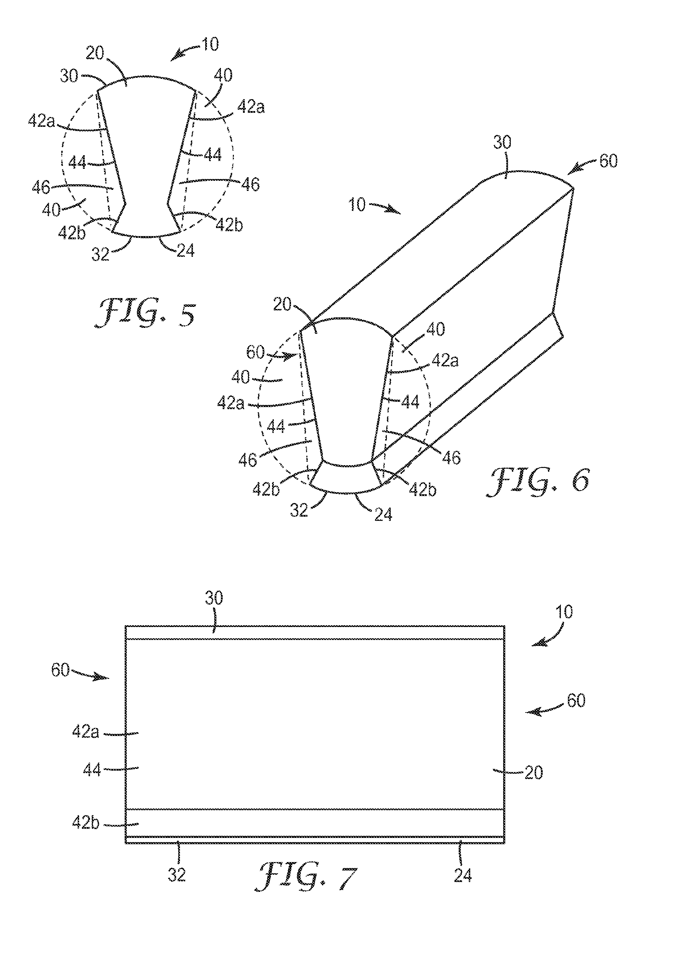

Figs. 5 to 7 show a second embodiment of the side-light guide 10. The difference to the embodiment as shown in figs. 1 to 4 is that the cut away regions 40 define a generally v-shaped cut away region at opposite sides of side-light guide 10. The V-shaped cut away region is defined by a planar surface 42a tapering inwardly from the light emitting surface or first surface 30 to the second surface 24 and a second planar surface 42b tapering inwardly from the second surface 24 to the first surface 30 and intersecting with planar surface 42a.

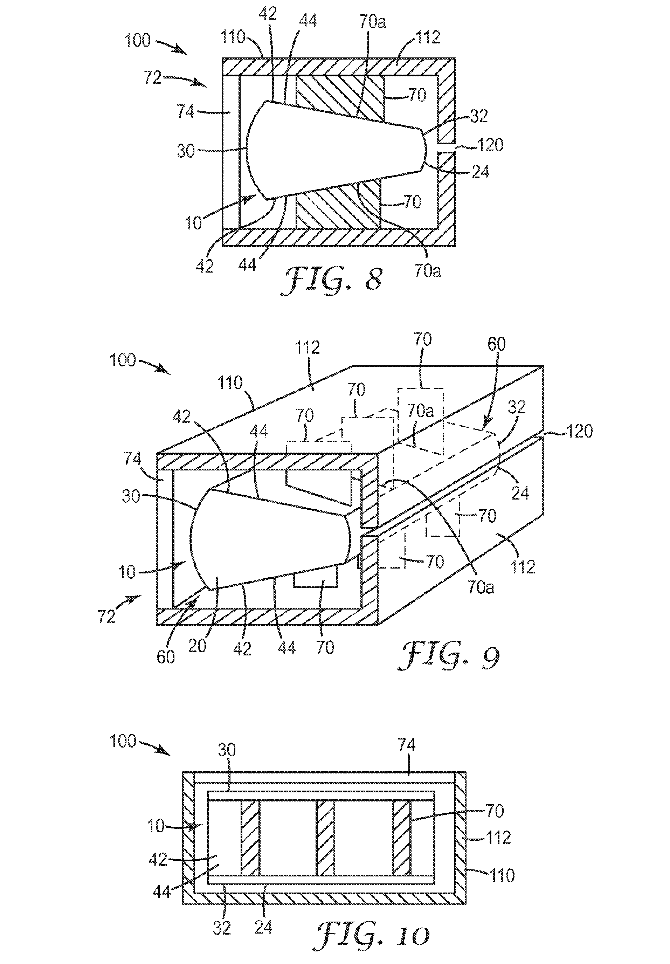

Figs. 8 to 10 show one embodiment of a light device 100 with the first embodiment of the side-light guide 10 as shown in figs. 1 to 4 being held in a support. The support is a housing 110 enclosing the light device 100. Fig. 9 is a cross-sectional view of the light device 100 comprising a housing 110. Furthermore, contact member 70 can be seen, which function will be described in more detail below. A transparent cover 74 covering the elongate opening 72 of the housing 110 of the light device 100 can also be seen. In a particular embodiment, the transparent cover 74 may be shaped to define a lens. A transparent cover 74 may help to protect the side-light guide 10 against environmental influences such as for example mechanical impact, sunlight, water, dust or other impurities or any other influence when the side-light guide 10 is being used on the outside, i. e. exposed to said environmental influences. The transparent cover 74 may be clear transparent or may have any desired color, for example red if the light device 100 comprising the side-light guide 10 is being used as a vehicle light, for example a stop light or the like.

The light device 100 comprises side wall 112 and an elongate opening 72 for facilitating light emission out of the housing 110, which is being emitted by the light emitting surface 30 of the side-light guide 10.

In one embodiment, one of the side walls 112 of the housing may comprise a longitudinal slit 120 therein. The slit 120, in combination with an embodiment of the housing 110 being formed of flexible material, may facilitate insertion of the side-light guide 10 into the housing 110 as the housing 110 can then be slightly opened during the insertion operation of the side-light guide 10.

The side-light guide is being held in position within the housing 110 of the light device 100 by means of contact members 70 as can be seen from figs. 8 to 10. Fig. 9 is a perspective view illustrating the arrangement of the contact members 70 relative to the side-light guide 10 within the housing 110. Fig. 10 is a top view, which also further illustrates the contact members 70. In figs. 9 and 10, three contact members 70 are arranged within the housing 110 between the sides 42 of the side-light guide 10 and the side walls 112 of the housing 110. It is conceivable to have a lower or higher number of contact members 70 arranged within the housing 110. Generally, at least two contact members 70 are desired to keep the side-light guide 10 securely in position. A higher number, for example three, four or more contact members 70 may help to increase the position keeping function, but may lead to loss of light. Contact member 70 could generally be integrally formed with the housing 110 or separately from the housing 110, i. e. being inserted and attached to the side walls 112 of the housing 110. The contact members 70 contacts the sides 42 of the side-light guide 10. The contact members 70 have substantially a longitudinal orientation which is perpendicular to the longitudinal orientation of the side-light guide 10 and extends partially or entirely along the length of the sides 42 of the side-light guide 10. Advantageously, more than one contact member 70 can be arranged on either of the sides 42 of the side-light guide 10 for better securing and keeping in position of the side-light guide 10 within the housing 110.

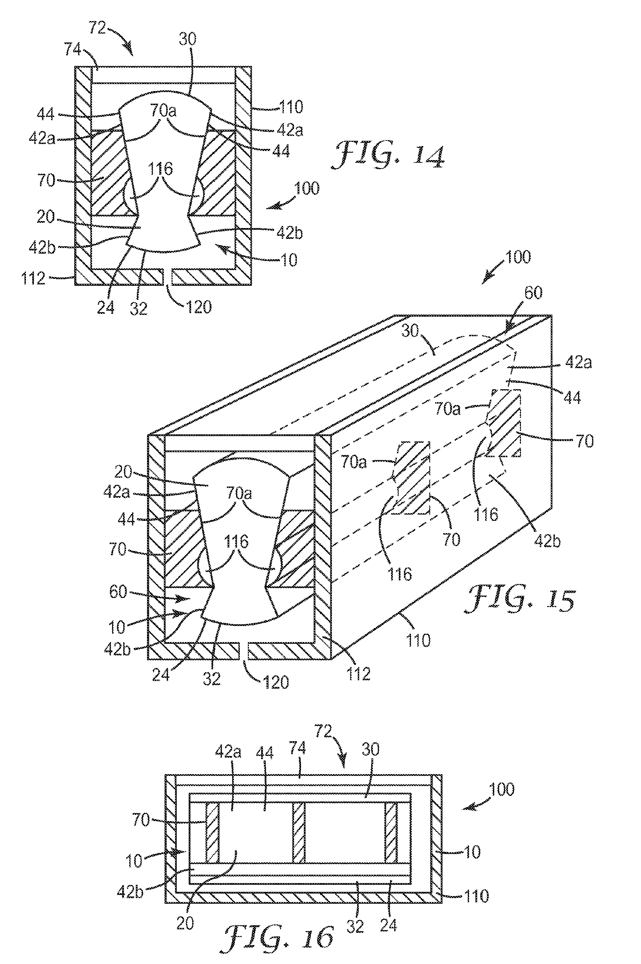

To further increase keeping the side-light guide 10 in position, means for increasing the contact between the side 42 of the side-light guide 10 and the contact members 70 are conceivable, for example an adhesive which is suitable to be used with side-light guides 10. As can be seen from figs. 9 and 10, contact member 70 comprises several discrete contact members 70 such as for example ribs arranged spaced apart along the longitudinal side-light guide 10. Such an arrangement will help to minimize the contact between the contact member 70 and the sides 42 of the side-light guide 10. Further measures to minimize contact between contact member 70 and the side 42 of the side-light guide 10 are outlined in conjunction with figs. 14 and 15. The contact member 70 comprises surfaces 70a, which are in contact with the sides 42 of the side-light guide 10 holding the side-light guide 10 in place in the housing 110.

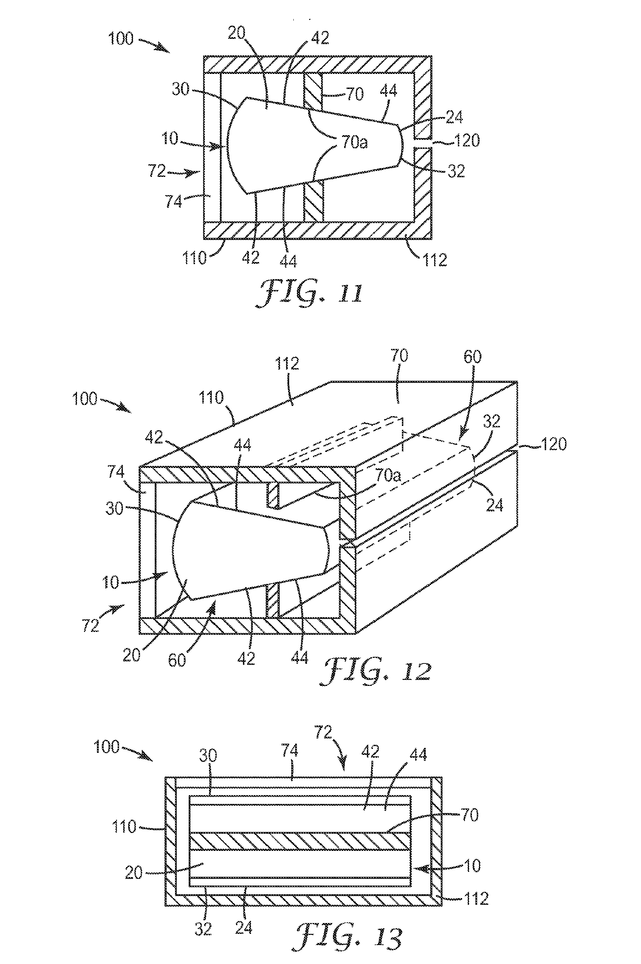

Figs. 11 to 13 show another embodiment of a light device 100 with the first embodiment of the side-light guide 10 being held in a housing 110. Fig. 11 is a cross-sectional view of the light device 100 comprising the side-light guide 10, a housing 110 and a contact member 70 to keep the side-light guide 10 in position within the housing 110. Fig. 12 is a perspective view illustrating how the contact member 70 is arranged within the housing 110. Fig. 13 is a top view of the embodiments as shown in figs. 11 and 12. There, also the contact member 70 relative to the side-light guide 10 can be seen.

The longitudinal slit 120, which was described in more detail with figs. 8 and 9, arranged in one of the side walls 112 of the housing can also be seen in figs. 11 and 12.

The difference to the embodiment of the light device 100 as shown in figs. 8 to 10 is that only one contact member 70 on each side 42 of the side-light device 10 is arranged between the sides 42 of the side-light guide 10 and the side walls 112 of the housing 110. The contact member 70 has substantially the same longitudinal orientation as the side-light guide 12 and extends partially or entirely along the length of the side-light guide 10. Advantageously, the contact members 70 as shown in figs. 8 to 10 can be combined with the contact members 70 as shown in figs. 11 to 13 in order to form a lattice-like shape of the contact members 70 (not shown in figs. 8 to 10 or 11 to 13).

The contact member 70 comprises surfaces 70a, which are in contact with the sides 42 of the side-light guide 10.

Figs. 14 to 16 show another embodiment of a light device 100 with the second embodiment of the side-light guide 10 being held in a housing 110. Fig. 15 is a cross-sectional view of the light device 100 comprising the side-light guide 10, a housing 110 and a contact member 70 to keep the side-light guide 10 in position within the housing 110. Fig. 16 is a perspective view illustrating how the contact member 70 is arranged within the housing 110. The longitudinal slit 120, which was described in more detail with figs. 8 and 9, arranged in one of the side walls 112 of the housing can also be seen in figs. 14 and 15.

The difference to the embodiment as shown in figs. 9 to 11 is that the side-light guide 10 is of the second embodiment as shown in figs. 5 to 8. Furthermore, the contact members 70 shown in figs. 15 to 17 are different in that the contact member 70 comprise cut away portions 116 minimizing contact to the sides 42 of the light-guide 10 as the length of the contact surface 70a being in contact with the side 42 of the side-light guide 10 is reduced. This is beneficial in order to minimize light loss. The cut away region 116 can be seen in figs. 14 and 15.

In one embodiment (not shown in the drawings), the housing may comprise two housing parts. Each of the housing parts comprises support to support the side-light guide contained in the housing. The two housing parts are being brought together and fixed relative to each other by means of engagement, e. g. snap-fit. In one embodiment, one of the housing may have substantially a u-shape and the other rather a lid-like shape. Any other suitable means, e. g. adhesive, screws or the like, are conceivable as well. During assembly of the light device 100, the side-light guide 10 will be inserted in the first housing part and being partially supported in there. The second housing part will then be attached to the first housing part as described above in order to fully support the inserted side-light guide 10.

Figs. 17 and 18 show another embodiment of a light device 100 with the third embodiment of the side-light guide 10 being held by a support 71 comprising a contact member 70. In the embodiment shown in figures 17 and 18, contact member 70 comprises a planar surface 71 a that is in contact with part of planar surface 42a. Contact member 70 further comprises a planar surface 71b that is spaced away from planar surface 42a but generally parallel thereto. Where planar surface 42a and 42b intersect and define the general V-shape of the side-light guide 10, contact member 70 contacts the side of the light guide as well. Below this point of contact, the contact members 70 at opposite sides of the side-light guide 10 define a cavity whereby the second surface 24 of the side-light guide 10, containing light extraction elements 32 held in a spaced away relationship to the bottom of support 71. Also shown in figures 17 and 18 is a side-light guide 10 that has further planar surfaces 40a on opposite sides and that extend from planar surface 42b to the second surface of the side-light guide. The additional planar surfaces 40a are generally parallel to the center plane of the side-light guide 10 and are generally parallel to surfaces 43 of the contact member 70 a and which surfaces 43 are spaced away from the planar surfaces 40a of the side-light guide 10. As can be seen in figures 17 and 18, the contact member 70 engages and generally mates in male-female way to the cut away region of the side-light guide 10.

In one embodiment, the support 71 may comprise two support parts (not shown in the figures), which will be brought and fixed together relative to each other. Suitable means are described above for a two-part housing. During assembly, as described above for the two-part housing as well, the side-light guide 10 will be brought in contact with the first support part, whereby the side-light guide 10 is already partially supported by the first support part, and then, the second support part will be attached to the first support part to fully support the inserted side-light guide 10.

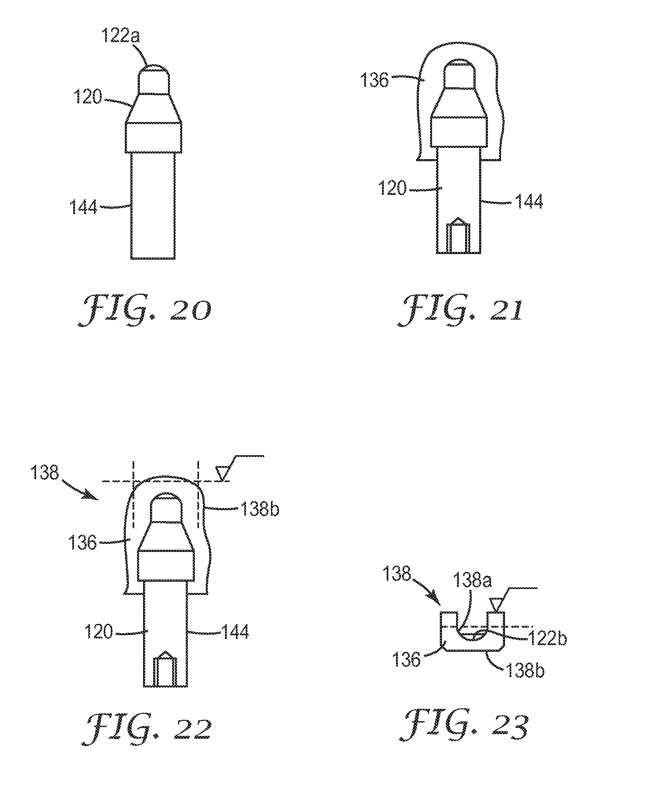

Figure 19 illustrates how a plurality of supports 71 comprising contact members 70 can be arranged spaced apart from each other to keep the side-light guide 10 in desired position such as for example a curve as can be seen from fig. 20. The plurality of contact members may be independent of each other or may be connected to one another like in a rail.

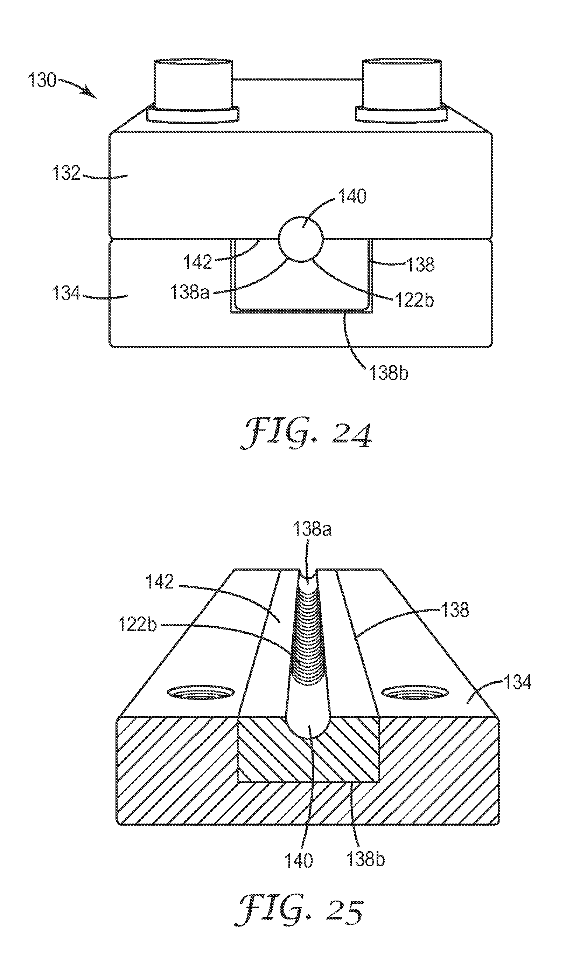

Figs. 20 to 25 illustrate the steps of a manufacturing process according to a particular embodiment for mold insert 138 of a mold 130 for making a side-light guide 10. Figs. 20 to 23 illustrate how the mold 130 can be made. The mold 130 comprises a first mold part 132 and a second mold part 134. The second mold part 134 typically comprises a mold insert 138 comprising the micro-structured features 122b (see fig. 24 and 25). The micro-structured features 122b can also be formed in the second mold part 134, i. e. integrally be formed in the material forming the second mold part 134 (not shown in the figs.). Fig. 20 shows the master rod 120 comprising the micro-structured features 122a to be replicated during the process of making a side-light guide 10.

In a first step, a metal deposition shell 136 is being formed in a electro-forming method, whereby the master rod 120 is being exposed to a galvanic bath or the like in order to deposit metal onto the surface of the master rod. Thereby, the micro-structured features 122a of the master rod 120 are being replicated to form a negative image, i. e. micro-structured features 122b. This step is being continued until a sufficient thickness of the metal deposition shell 136 is obtained, which is shown in fig. 21.

Fig. 22 illustrates the machining of the outer surface 138b of the mold insert 138 formed by the electro-forming process of the metal deposition shell 136 as described above. The step of machining the outer shape of the mold insert 138 is carried out advantageously before the metal deposition shell is being removed from the master rod 120. This ensures that the position of the micro-structured features 122a, which is fixed relative to the reference edge 144 as can be seen in figs. 20 to 22, is ensured. A high accuracy of the position and shape of the micro-structured features is thereby ensure as needed for a high-quality side-light guide 10.

Optional further machine and shaping of the outer surface of the mold insert 138 is illustrated in fig. 23. Here, the mold insert 138 comprising the metal deposition shell 136 was already removed from the master rod 120. Also, the micro-structured features 122b, which are formed in the inner surface 138a of the mold insert 138, are indicated in fig. 23. Fig. 24 shows the assembled mold 130 for molding of the side-light guide 10 comprising an expandable two-piece mold 130. The mold 130 comprises a generally hollow cavity 140 formed by an inner surface 138a of the mold 130 substantially at the center of it. Furthermore, inner surface 138a is imparted with a plurality of micro-structured features 122b, which were formed as a negative image of the micro-structured features 122a of the master rod 120 as described above. The hollow cavity 140 of mold 130 is accessible through at least one opening. The mold 130 should allow expansion of hollow cavity 140 substantially in a direction of moving the mold parts 132, 134 away from each other. This direction may be perpendicular to longitudinal extension of the side-light guide 10. The mold insert 138 is being inserted into a suitable cavity in the second mold part 134 as shown in figs. 24 and 25, whereby the outer surface 138b of the mold insert 138 is in contact with the cavity formed in the second mold part 134. As can be seen from fig. 24, the mold 130 will be assembled and the two mold parts 132, 134 will be secured relative to each other by suitable means, for example screws connecting the two mold parts 132, 134. Any other suitable means for fixing and/or securing of the mold parts 132, 134 relative to each other are conceivable as well.

Fig. 25 shows the mold insert 138, which is inserted into a cavity of the second mold part 134. The inner surface 138a of the mold insert comprises the micro-structured features 122 which were replicated from the micro-structured features 122a of the master rod 120 during the electro-forming process as described above. Thus, the micro-structures features 122b are a negative image of the micro-structured features 122a of the master rod 120. Fig. 25 furthermore shows a contact edge 142 of the second mold part 134, which will be brought into contact with the respective contact edge of the first mold part (not shown) during the process of making a side-light guide 10.

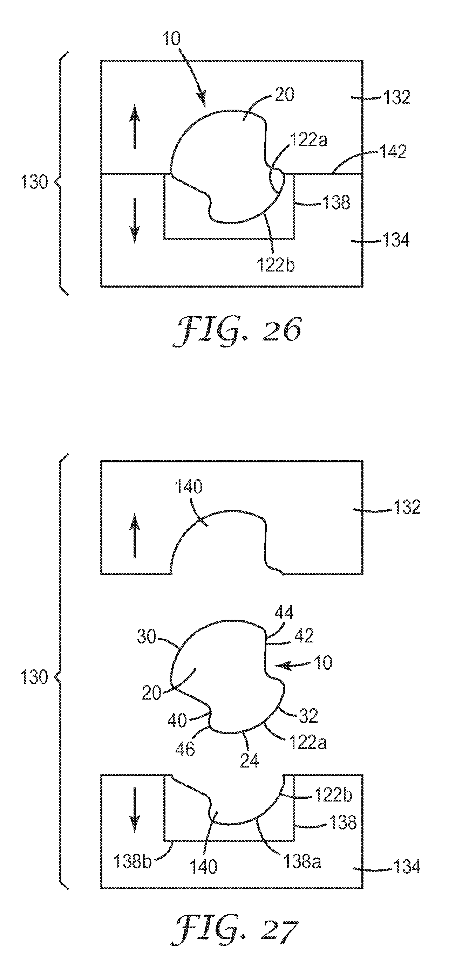

Figs. 26 and 27 illustrate the steps of a process for making a side-light guide 10.In this process, the two mold parts 132 and 134 are being brought into contact at their respective contact edges illustrated at 142. Then, a suitable material can be inserted by injection molding in order to form the side-light guide 10. After curing or hardening of the material, the mold 130 can be opened, whereby the two mold parts 132, 134 will be moved away from each other in order to provide access to the cavity 140 and remove the side-light guide there from.

With this process, the micro-structured features 122b of the mold insert 138 will be replicated on the second surface 24 of the side-light guide 10 and thus, form micro-structured features 122a on the side-light guide 10, which are substantially of the same exact shape as the micro-structured features 122a of the master rod 120.

Fig. 27 shows the opened mold 130 and the ejected side-light guide 10. As illustrated in these figures, a two-part mold 130 offers the advantage of producing side-light guides 10 with cut away regions 40, 43, 46 of relatively complex shapes, such as for example a V-shape which may be more difficult to produce in known processes for making side-light guides 10. In particular, as shown in the figures, the cavity 140 defining the shape of the side-light guide 10 may be arranged such that the center plane of the side-light guide 10 to be formed therein is at an angle relative to the plane defined between the two mold parts 132 and 134 of the mold 130. This facilitates removal of the side-light guide from the mold as can be seen in particular from figure 27.

## Claims

1. A side-light guide having a naked core of transparent polymeric material without a cladding, said side-light guide having a first surface defining a light emitting surface extending longitudinally along the side-light guide and a second surface having light-extraction elements extending longitudinally along the side-light guide and said second surface being arranged generally opposite to the first surface, the side-light guide having a generally circular cross-section comprising cut away regions at opposing sides defining on each opposite side at least one planar surface tapering inwardly from said first towards said second surface.

2. A side-light guide according to claim 1 wherein each of said planar surfaces substantially extends from said first to said second surface.

3. A side-light guide according to claim 1 wherein the cut away regions at opposing sides defines on each opposite side a further planar surface tapering inwardly from said second surface to said first surface and connecting to said planar surface extending inwardly from said first towards said second surface thereby defining a generally V-shaped cut away region at each opposite side.

4. A side-light guide according to any of the previous claims wherein the side-light guide is elastic.

5. A side-light guide according to any of the previous claims wherein the frequency of light extraction elements varies along the length of the side-light guide.

6. A side-light guide according to claim 5 wherein the frequency of light extraction elements increases length-wise in a direction away from at least one end of the side-light guide.

7. A side-light guide according to claim 6 wherein the frequency of light extraction elements increases away from both opposite ends of the side light guide thereby defining the highest frequency of light extraction elements in about the middle region between both opposite ends of the side-light guide.

8. A light device comprising a side-light guide as defined in any of the previous claims, wherein said side-light guide is located in a support that has an elongate opening for the passage of light emitted by the side-light guide whereby the side-light guide is oriented such that said first surface of said side-light guide is aligned with the elongate opening of the support.

9. A light device according to claim 8 wherein said support contacts said side-light guide in said cut away regions to retain said side-light guide in said orientation in the support.

10. A light guide according to claim 9 wherein said support contacts only a portion of said side-light guide in said cut away regions along the length of the side-light guide.

11. A light guide according to claim 10 wherein said support comprises a housing surrounding the side-light guide and whereby an air gap is defined between the support and the second surface of the side-light guide and one or more air gaps on the opposite sides along the length of the side-light guide.

12. A light device according to claim 8 or 9 wherein the side light guide has a cut away region as defined in claim 3 and wherein the support is shaped so as to physically engage with said cut away region and retain the side-light guide in said support.

13. A light device according to claim 11 wherein the elongate opening comprised in said housing is closed by a transparent cover and wherein said transparent cover defines a lens.

14. A light device according to any of claims 8 to 13 comprising a light source coupling light into said side-light guide at an end of said side-light guide.

15. A vehicle comprising a light device as defined in any of claims 8 to 14.
